# EUROPÄISCHE PATENTSCHRIFT

(11) **EP 1 421 140 B1**
(45) Veröffentlichungstag und Bekanntmachung des Hinweises auf die Patenterteilung: **28.12.2005**
(21) Anmeldenummer: 02772231.3
(22) Anmeldetag: 30.08.2002
(51) Int. Cl.: C08L 29/04, C08J 3/18

(54) **VERFAHREN ZUR HERSTELLUNG VON KUNSTSTOFF-FORMKÖRPERN AUF BASIS VON POLYVINYLALKOHOL MITTELS THERMOPLASTISCHER VERFAHREN**
METHOD FOR THE PRODUCTION OF PLASTIC SHAPED BODIES BASED ON POLYVINYL ALCOHOL INVOLVING THERMOPLASTIC METHODS
PROCEDE DE FABRICATION DE CORPS MOULES EN MATIERE SYNTHETIQUE A BASE D'ALCOOL POLYVINYLIQUE PAR TRAITEMENT THERMOPLASTIQUE

(30) Priorität: 01.09.2001 DE 10142922
(43) Veröffentlichungstag der Anmeldung: 26.05.2004
(73) Patentinhaber: Kuraray Specialities Europe GmbH, 65926 Frankfurt am Main (DE)
(72) Erfinder: KÖHNEN, Sven, 65527 Niedernhausen (DE); STEUER, Martin, 65835 Liederbach (DE); LEPPER, Gerd, 61476 Kronberg (DE)
(74) Vertreter: Kisters, Michael Marcus
(86) Internationale Anmeldenummer: PCT/EP2002/009664
(87) Internationale Veröffentlichungsnummer: WO 2003/020823

(56) Entgegenhaltungen:
- EP-A- 0 004 587
- EP-A- 0 415 357
- HARR US, A. ET AL: "Kunststoff-Folien aus Polyvinylalkohol" KUNSTHARZ-NACHRICHTEN, Bd. 14, 1978, Seiten 1-6, XP009003068 in der Anmeldung erwähnt
- HARR US, A. ET AL: "Kunststoff-Folien aus Polyvinylalkohol" KUNSTHARZ-NACHRICHTEN, Bd. 15, 1979, Seiten 33-39, XP009003067 in der Anmeldung erwähnt

## Beschreibung

Die vorliegende Erfindung betrifft ein Verfahren zur Herstellung von Kunststoff-Formkörpern auf Basis von Polyvinylalkohol mittels thermoplastischer Verfahren

Polyvinylalkohole werden bekanntermaßen durch Hydrolyse (Alkoholyse) von Polyvinylacetaten hergestellt. Auf diese Weise erhält man mit fortschreitender Hydrolyse Polymermoleküle, die aufgrund des zunehmenden Gehalts an OH-Gruppen schließlich wasserlöslich sind.

Bei dem Begriff Polyvinylalkohol handelt es sich folglich um Polymermoleküle mit einem molekularen Anteil an Vinylalkohol-Einheiten von ca. 60 bis 100 mol-%. Der Rest der Monomer-Einheiten stellt dann jeweils Vinylacetat-Einheiten dar. Zwar sind für Spezialanwendungen auch Polyvinylalkohole mit einem Verseifungsgrad von weniger als 60 mol-% bekannt, diese haben jedoch eine relativ geringe Bedeutung.

Von teilverseiften Polyvinylalkoholen spricht man im allgemeinen, wenn die Polyvinylalkohole einen Verseifungsgrad (Hydrolysegrad) von etwa 80 bis 92 mol-% aufweisen, d.h., die Polymermoleküle noch 8 bis 20 mol-% Vinylacetat-Einheiten aufweisen. Die sog. vollverseiften Polyvinylalkohole besitzen dagegen im allgemeinen einen Hydrolysegrad von mehr als 92 mol-%. Dabei sind sowohl die vollverseiften als auch die teilverseiften Polyvinylalkohole aufgrund der Vielzahl an OH-Gruppen wasserlöslich.

Weiterhin sind auch Vinylalkohol-Copolymere, beispielsweise Ethylen-Vinylalkohol-Copolymere, bekannt.

Aufgrund ihrer Wasserlöslichkeit werden Polyvinylalkohole unter anderem bei der Herstellung von wasserlöslichen Formkörpern, insbesondere wasserlöslichen Verpackungsmaterialien, eingesetzt.

Weitere Vorteile von Polyvinylalkohol-Formkörpern sind deren Unlöslichkeit in organischen Lösungsmitteln, deren Barrierewirkung gegenüber diesen organischen Lösungsmitteln sowie ferner deren biologische Abbaubarkeit bzw. Verrottbarkeit.

Folien aus Polyvinylalkoholen wurden dabei großtechnisch zunächst durch Gießverfahren aus wässrigen Polyvinylalkohol-Lösungen, meist unter Zuschlag weichmachender Substanzen, hergestellt.

Erst später konnten solche wasserlöslichen Verpackungsmaterialien aus Polyvinylalkohol wirtschaftlicher durch thermoplastische Verarbeitung hergestellt werden.

Dabei wirkte sich zunächst die Anwesenheit der Vielzahl sehr polarer OH-Gruppen im Molekül insofern negativ aus, als intermolekulare und intramolekulare Wasserstoffbrückenbindungen zu "Verschlaufungen" der Polymermoleküle führten. Dies hatte zur Folge, dass, trotz einer Glasübergangstemperatur (Tg) im Bereich von 60 bis 80°C, selbst bei Temperaturen von über 200°C unter Extrusionsbedingungen kein für die thermoplastische Verarbeitung praxisrelevantes Fließen des Polyvinylalkohols in entsprechenden Apparaturen zu erzielen war. Es trat vielmehr eine, insbesondere bei Temperaturen über 180°C und durch eine längere Verweilzeit bei diesen Temperaturen, mehr oder weniger starke Zersetzung des Polyvinylalkohols, z.B. unter Wasserabspaltung, zu gelblich bis bräunlichen Produkten auf. Formkörper ließen sich auf diese Weise aus reinem Polyvinylalkohol nicht herstellen. Die beschriebenen Probleme konnten durch den Zusatz von Weichmachern vermieden bzw. zumindest drastisch reduziert werden.

Aus der DE-A-10 81 229 ist ferner die Herstellung wasserlöslicher, modifizierter Polyvinylalkohole durch Solvolyse eines Pfropfcopolymerisats von einem oder mehreren Vinylestern auf Polyalkylenglykolen bekannt. Aber auch zu deren thermoplastischer Verarbeitung ist der Einsatz von externen Weichmachern notwendig, wie aus der EP-A-0 039 854 hervorgeht.

Die thermoplastische Verarbeitung von Polyvinylalkoholen setzte somit im allgemeinen den Zusatz von externen Weichmachern voraus.

Solche Weichmacher sind niedermolekulare, organische Substanzen, die eine relativ starke Polarität aufweisen. Diese polare und hydrophile Struktur ist notwendig, um eine möglichst gute Verträglichkeit mit der ebenfalls stark polaren sowie hydrophilen Struktur des Polyvinylalkohols zu erreichen. Bevorzugte Weichmacher sind mehrwertige Alkohole sowie deren Derivate, wie zum Beispiel Glykole (z.B. Glykol, Diglykol, Triglykol und Polyethylenglykole), Glycerin, Diole und Triole. Die Auswahl der Weichmacher, die als Rezepturbestandteil für thermoplastisch zu verarbeitende Polyvinylalkohol-Massen geeignet sind, ist dem Fachmann bekannt und in einer Vielzahl von Publikationen ausführlich beschrieben.

Die Herstellung von Polyvinylalkohol/Weichmacher-Blends erfolgt dabei vorzugsweise durch Mischen der Bestandteile in einem hochtourigen Zwangsmischer unter Anwendung eines geeigneten Temperaturprofils. Solche Verfahren werden zum Beispiel in der EP-A-0 004 587 und der EP-A-0 155 606 beschrieben.

Die Blend-Vorgänge machen jedoch den Einsatz teurer Spezialmischgeräte notwendig und wirken sich somit sowohl technisch als auch preislich negativ auf die Herstellung der Extrusionsgemische und damit indirekt auf die Herstellung wasserlöslicher Formkörper, wie zum Beispiel wasserlöslicher Verpackungen, aus.

Problematisch ist bei der thermoplastischen Verarbeitung darüber hinaus auch die Plastifizierung des Polyvinylalkohols an sich, da sie oft nicht zu vollkommen gleichmäßig und homogen plastifizierten Polyvinylalkohol-Granulaten führt. Da jedoch jede thermoplastische Verarbeitung, insbesondere aber die Blasextrusion, entsprechender Polyvinylalkohol-Blends zu wasserlöslichen Formkörpern sehr sensibel auf nicht vollständig homogen plastifizierte Partikel (Stippen) reagiert, führen die bekannten Verfahren häufig zu unbefriedigenden Ergebnissen. So können zum Beispiel kleinste Stippen zu inhomogenen Oberflächen von Spritzguss-Formkörpern oder sogar zum Platzen der Extrusionsblase führen. Sie stören in jedem Falle die geforderte gute (Kalt)wasserlöslichkeit des Formkörpers.

Gemäß dem Stand der Technik erfolgt die Extrusion von Polyvinylalkohol allgemein durch zweistufige Verfahren, wobei in einem ersten Schritt Polyvinylalkohol, Weichmacher und gegebenenfalls Additive in einem Zwangsmischer gemischt werden, wodurch ein rieselfähiger Blend entsteht, der in einem zweiten Schritt mittels eines Extruders aufgeschmolzen und zu Formkörpern weiterverarbeitet wird. Eine zusammenfassende Darstellung eines solchen zweistufigen Verfahrens wird in den Kunstharz-Nachrichten, Ausgabe 14, Seiten 1 bis 6, 1978, und Ausgabe 15, Seiten 33 bis 39, 1979, gegeben. Die Herstellung der Polyvinylalkohol-Weichmacher-Blends erfordert dabei Spezialapparaturen, wie zum Beispiel Zwangsmischer, die hohe Ansprüche an die Temperaturführung und den zeitlichen Verlauf des Mischprozesses stellen. Weiterhin ist zur Erreichung der Rieselfähigkeit der Blends im allgemeinen der Zusatz von Antiblockmitteln, wie zum Beispiel hochdispersen Kieselsäuren, notwendig, die zu einer Trübung der aus den Blends hergestellten Formkörpern führen können.

So wird in der EP-A-0 415 357 ein weichmacherhaltiges Polyvinylalkohol-Granulat offenbart, das durch Schmelzextrusion einer Beschickungszusammensetzung hergestellt wird, die Polyvinylalkohol und einen Weichmacher umfasst, wobei das Granulat eine maximale Schmelztemperatur aufweist, die mindestens 5°C niedriger als die der Beschickungszusammensetzung ist. Die Herstellung des Polyvinylalkohol-Granulates erfolgt dabei ebenfalls durch vorherige Zwangsmischung der Beschickungszusammensetzung des Extruders und weist somit auch die oben beschriebenen wirtschaftlichen Nachteile auf. Darüber hinaus muss bei diesem Verfahren eine Kühlung der Schmelze vorgenommen werden, um die thermische Zersetzung der Schmelze und somit eine Stippenbildung zu vermeiden oder zumindest so gering wie möglich zu halten. Zur Herstellung spezieller Formkörper bedarf es zudem noch einer weiteren Extrusion.

In der EP-A-0 080 664 wird die Direkt-Compoundierung einer Polyvinylalkohol-Zusammensetzung unter Zugabe von 5 bis 40 Gew.-% Wasser, bezogen auf den Polyvinylalkohol, beschrieben. Die Menge an Wasser wird dabei so gewählt, dass sie einerseits ausreicht (≥ 5 Gew.-%), um eine einwandfreie Extrusion zu ermöglichen, andererseits aber auch nicht zum Lösen des Polyvinylalkohols ausreicht (≤ 40 Gew.-%). Das eingesetzte Wasser muss in der Entgasungszone des Extruders wieder entfernt werden, reißt dabei gewisse Mengen der anderen Zusätze mit aus der Mischung (Blasenbildung).

Ferner lassen sich mit den angegebenen Zylindertemperaturen von 80 bis 200°C und den angegebenen Massetemperaturen des Polyvinylalkohols von 80 bis 130°C an der Düse jedoch nur niedrigviskose, teilverseifte Polyvinylalkohole verarbeiten. Insbesondere lassen sich aufgrund der niedrigen Massetemperaturen auch nur niedrige Durchsätze erzielen. Das Verfahren ist damit außer dass es hinsichtlich der einsetzbaren Polyvinylalkohol-Typen stark eingeschränkt ist, zudem noch unwirtschaftlich.

Die Patentanmeldung WO93/09171 A beschreibt die thermoplastische Verarbeitung von bioabbaubaren Polymerzusammensetzungen, die Polyvinylalkohol, einen Weichmacher, wie beispielsweise Glycerin, Ethylendiglykol und/oder Propylendiglykol, und bezogen auf den Polyvinylalkohol 2 bis 40 Gew.-% Wasser enthalten. Weiterhin enthalten die Zusammensetzungen im allgemeinen Stärke. Die thermoplastische Verarbeitung dieser Zusammensetzungen führt zu Formkörpern mit einer verringerten Anzahl an Stippen, scheinbar werden pro m² weniger als 100 Stippen mit einer Größe kleiner 100 µm beobachtet. Dennoch werden von den Anwendern Formkörper mit einer noch geringeren Anzahl an Stippen gefordert.

Ausgehend von dem genannten Stand der Technik, kann es als Aufgabe der vorliegenden Erfindung angesehen werden, ein wirtschaftliches Verfahren zur Herstellung von Kunststoff-Formkörpern auf Basis von Polyvinylalkohol bereitzustellen, das nicht die aus dem Stand der Technik bekannten Nachteile aufweist. Insbesondere sollte es mit diesem Verfahren möglich sein, sowohl aus voll- als auch aus teilverseiften Polyvinylalkoholen, die zudem noch in einem breiten Viskositätsbereich variieren können, sowie aus PolyvinylalkoholCopolymeren Kunststoff-Formkörper auf Basis von Polyvinylalkohol herzustellen.

Weiterhin war es Aufgabe der vorliegenden Erfindung, ein Verfahren anzugeben, welches die Herstellung von Kunststoff-Formkörpern auf Basis von Polyvinylalkohol mit einer möglichst geringen Anzahl an Stippen mit möglichst kleiner Größe erlaubt.

Überraschenderweise wurde gefunden, dass sich Kunststoff-Formkörper auf Basis von Polyvinylalkohol durch Extrusion von Vinylalkoholpolymeren und/oder Vinylalkoholcopolymeren, mindestens einem Weichmacher sowie gegebenenfalls Wasser und Additiven herstellen lassen, ohne dass eine vorherige Mischung von Vinylalkohol(co)polymer und Weichmacher stattgefunden hat.

Weiterhin werden auf diese Weise überraschenderweise Formkörper mit einem äußerst geringen Stippengehalt erhalten. Typischerweise werden Formkörper mit weniger als 100 Stippen pro m² erhalten, wobei alle Stippen kleiner als 1 mm sind.

Gegenstand der vorliegenden Erfindung ist somit ein Verfahren zur Herstellung von Kunststoff-Formkörpern durch thermoplastische Verarbeitung von - mindestens einem Polymer (A), mindestens einem Weichmacher sowie gegebenenfalls Wasser und/oder weiteren Additiven, das dadurch gekennzeichnet ist, dass das Polymer (A) und der Weichmacher ohne vorherige Mischung in den Extruder gegeben werden und das der Anteil an Wasser als Summe der Wasseranteile der Ausgangskomponenten weniger als 2 Gew.-%, bezogen auf den Polyvinylalkohol, beträgt.

Gemäß der vorliegenden Erfindung enthält das Polymer (A) jeweils bezogen auf sein Gesamtgewicht
a.) 15,0 bis 99,9 Gew.-%, vorzugsweise 25,0 bis 99,9 Gew.-%, zweckmäßigerweise 40,0 bis 99,9 Gew.-%, insbesondere 50,0 bis 99,9 Gew.-% Struktureinheiten der Formel (1) 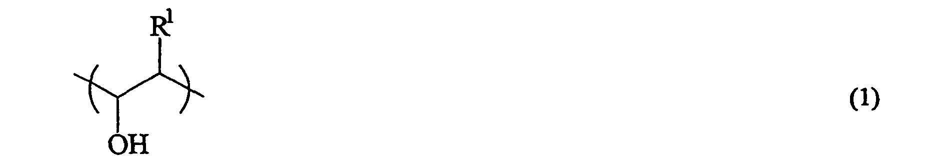
b.) 0,0 bis 50,0 Gew.-%, vorzugsweise 0,1 bis 50,0 Gew.-%, Struktureinheiten der Formel (2) 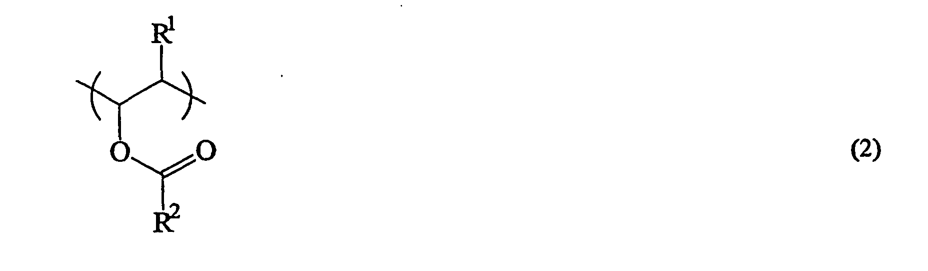
c.) 0,0 bis 50,0 Gew.-% Struktureinheiten der Formel (3)

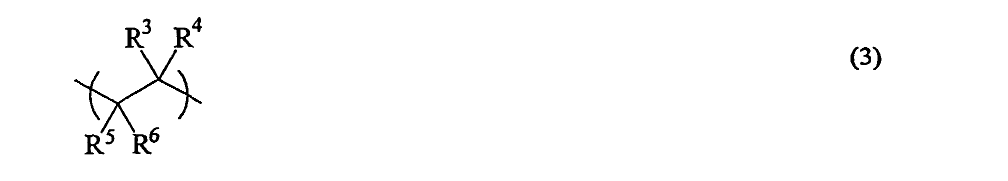

Dabei sind die jeweiligen Struktureinheiten natürlich voneinander verschieden, insbesondere umfasst die Struktureinheit der allgemeinen Formel (3) nicht die Struktureinheiten der allgemeinen Formel (1) und/oder (2).

Der Rest R¹ stellt jeweils unabhängig voneinander Wasserstoff oder Methyl, vorzugsweise Wasserstoff, dar.

Der Rest R² kennzeichnet einen Alkylrest mit 1 bis 6 Kohlenstoffatomen, zweckmäßigerweise eine Methyl-, Ethyl-, n-Propyl-, iso-Propyl-, n-Butyl-, sec-Butyl-, tert-Butyl-, n-Pentyl- oder eine n-Hexylgruppe, vorteilhafterweise eine Methyl- oder eine Ethylgruppe, insbesondere eine Methylgruppe.

Die Reste R³, R⁴, R⁵ und R⁶ sind jeweils unabhängig voneinander Reste mit einem Molekulargewicht im Bereich von 1 bis 500 g/mol, zweckmäßigerweise Wasserstoff, ein gegebenenfalls verzweigter, aliphatischer oder cycloaliphatischer Rest mit 1 bis 16 Kohlenstoffatomen, der gegebenenfalls eine oder mehrere Carbonsäure-, Carbonsäureanhydrid-, Carbonsäureester-, Carbonsäureamid- und/oder Sulfonsäuregruppen enthalten kann.

Besonders bevorzugte Struktureinheiten der Formel (3) leiten sich von geradkettigen oder verzweigten Olefinen mit 2 bis 18 Kohlenstoffatomen, (Meth)acrylsäure, Maleinsäure, Maleinsäureanhydrid, Fumarsäure, Itaconsäure, (Meth)acrylamiden und/oder Ethylensulfonsäure ab. Dabei haben sich Olefine, insbesondere solche mit einer endständigen C-C-Doppelbindung, die vorzugsweise 2 bis 6 Kohlenstoffatome aufweisen, insbesondere Ethylen, als ganz besonders günstig erwiesen. Weiterhin führen auch Struktureinheiten (3), die sich von Acrylamidopropenylsulfonsäure (AMPS) ableiten, erfindungsgemäß zu ganz besonders vorteilhaften Ergebnissen.

Die Gesamtanzahl an Struktureinheiten der Formel (2) ist vorzugsweise im Bereich von 0,1 bis 50 mol-%, vorteilhafterweise im Bereich von 0,1 bis 30 mol-%, zweckmäßigerweise im Bereich von 0,1 bis 20 mol-%, insbesondere im Bereich von 0,1 bis 16 mol-%, jeweils bezogen auf die Gesamtanzahl an Struktureinheiten der Formel (1) und (2). Besonders vorteilhafte Ergebnisse sind im Rahmen der vorliegenden Erfindung für eine Gesamtanzahl an Struktureinheiten der Formel (2) im Bereich von 0,3 bis 13 mol-%, insbesondere im Bereich von 0,5 bis 10 mol-%, jeweils bezogen auf die Gesamtanzahl an Struktureinheiten der Formel (1) und (2), zu beobachten.

Die Gesamtanzahl an Struktureinheiten der Formel (3) ist vorzugsweise im Bereich von 0,1 bis 20 mol-%, zweclanäßigerweise im Bereich von 2 bis 19 mol-%, insbesondere im Bereich von 2,5 bis 17 mol-%, jeweils bezogen auf die Gesamtanzahl an Struktureinheiten der Formel (1), (2) und (3). Besonders vorteilhafte Ergebnisse sind im Rahmen der vorliegenden Erfindung für eine Gesamtanzahl an Struktureinheiten der Formel (3) im Bereich von 3,0 bis 15 mol-%, insbesondere im Bereich von 3,5 bis 13 mol-%, jeweils bezogen auf die Gesamtanzahl an Struktureinheiten der Formel (1), (2) und (3), zu erzielen.

Im Rahmen einer besonders bevorzugten Ausführungsform der vorliegenden Erfindung wird als Polymer (A) ein Ethylen-Vinylalkohol-Copolymer mit 1 bis 19 mol-%, vorzugsweise 2 bis 10 mol-% , Einheiten (3), die sich von Ethylen ableiten, und 75 bis 99 mol-%, vorzugsweise 90 bis 98 mol-%, Einheiten (1), wobei R¹ Wasserstoff ist, jeweils bezogen auf die Gehalt an Einheiten (1), (2) und (3) eingesetzt. Derartige Copolymere sind beispielsweise unter dem Handelsnamen Exceval® kommerziell erhältlich.

Erfindungsgemäß enthält das Polymer (A), jeweils bezogen auf sein Gesamtgewicht, vorzugsweise > 60 Gew.-%, vorteilhafterweise > 70 Gew.-%, insbesondere > 80 Gew.-% an Struktureinheiten der Formel (1) und/oder (2). Besonders vorteilhafte Ergebnisse können dabei mit Polymeren (A) erzielt werden, die, jeweils bezogen auf ihr Gesamtgewicht, > 85 Gew.-%, zweckmäßigerweise > 90 Gew.-%, vorteilhafterweise > 95 Gew.-%, insbesondere > 99 Gew.-% an Struktureinheiten der Formel (1) und/oder (2) enthalten.

Im Rahmen der vorliegenden Erfindung kann das Polymer (A) einen syndiotaktischen, isotaktischen und/oder ataktischen Kettenaufbau besitzen. Weiterhin kann es gegebenenfalls sowohl als random- als auch als Blockcopolymer vorliegen.

Die Herstellung dieser Polymere (A) kann auf an sich bekannte Weise in einem zweistufigem Verfahren erfolgen. In einem ersten Schritt wird der entsprechende Vinylester in einem geeigneten Lösungsmittel, in der Regel Wasser oder ein Alkohol, wie Methanol, Ethanol, Propanol und/oder Butanol, unter Verwendung eines geeigneten Radikalstarters, radikalisch polymerisiert. Wird die Polymerisation in der Gegenwart radikalisch copolymerisierbarer Monomere durchgeführt, so erhält man die entsprechenden Vinylester-Copolymere.

Das Vinylester(co)polymer wird dann in einem zweiten Schritt, üblicherweise durch Umesterung mit Methanol, verseift, wobei man den Verseifungsgrad auf an sich bekannte Weise, beispielsweise durch Variation der Katalysatorkonzentration, der Reaktionstemperatur und/oder der Reaktionszeit, gezielt einstellen kann. Für weitere Details wird auf die gängige Fachliteratur, insbesondere auf Ullmann's Encyclopedia of Industrial Chemistry, Fifth Edition on CD-Rom Wiley-VCH, 1997, Keyword: *Poly(Vinyl Acetals)* und die dort angegebenen Literaturstellen verwiesen.

Die Herstellung erfindungsgemäß besonders geeigneter Copolymere wird in der europäischen Patentanmeldung EP-1,008,605 A beschrieben, auf deren Offenbarung hiermit explizit bezug genommen wird.

Mit dem erfindungsgemäßen Verfahren können alle bekannten Polyvinylalkohole thermoplastisch verarbeitet werden. Somit lassen sich sowohl niederviskose, teilverseifte als auch hochviskose, vollverseifte Polyvinylalkohole thermoplastisch verarbeiten. Auch können Mischungen verschiedener Polyvinylalkohole thermoplastisch verarbeitet werden.

Jedoch ist die vorliegende Erfindung nicht auf den Einsatz von "konventionellen " Polyvinylalkoholen beschränkt. Vielmehr hat sich auch die Verwendung von Pfropfcopolymeren als besonders günstig erwiesen. Diese werden zweckmäßigerweise derart erhalten, dass man in bekannter Weise den oder die Vinylester auf mindestens ein Polyalkylenglykol, vorzugsweise Polyethylonglykol oder Polypropylenglykol, insbesondere Polyethylenglykol aufpfropft, und anschließend die Estergruppen teilweise oder vollständig, vorzugsweise in Methanol, hydrolysiert. Dabei weist der Polyalkylenglykol vorzugsweise ein Gewichtsmittel des Molekulargewichts im Bereich von 100 bis 10.000.000 g/mol, zweckmäßigerweise im Bereich von 200 bis 1.000.000 g/mol, vorteilhafterweise im Bereich von 200 bis 200.000 g/mol, insbesondere im Bereich von 500 bis 25.000 g/mol, auf. Besonders vorteilhafte Ergebnisse können erfindungsgemäß erzielt werden, wenn der Polyalkylenglykol ein Gewichtsmittel des Molekulargewichts im Bereich von 500 bis 10.000 g/mol aufweist. Dabei wird das Gewichtsmittel auf an sich bekannte Weise, vorzugsweise durch statische Lichtstreuung bestimmt.

Besonders vorteilhafte Pfropfcopolymere weisen 1 bis 50 Gew.-%, vorzugsweise 10 bis 50 Gew.-%, Alkylenoxid-, und 50 bis 99 Gew.-%, vorzugsweise 50 bis 90 Gew.-%, Einheiten (2) und/oder (3) auf.

Wertvolle Hinweise zur Herstellung erfindungsgemäß besonders geeigneter Pfropfcopolymere können den Druckschriften de 1081 229 A und DE 1 094 457 A entnommen werden, auf deren Offenbarung hiermit explizit bezug genommen wird.

Die Viskosität des Polymers (A) ist erfindungsgemäß von untergeordneter Bedeutung, prinzipiell können sowohl niedermolekulare als auch hochmolekulare Polymere (A) benutzt werden. Dennoch hat es sich im Rahmen der vorliegenden Erfindung als ganz besonders günstig erwiesen, dass das Polymer (A) eine Viskosität im Bereich von 2 bis 70 mPas, vorzugsweise im Bereich von 2 bis 40 mPas, zweckmäßigerweise im Bereich von 3 bis 30 mPas, insbesondere im Bereich von 3 bis 15 mPas, aufweist (gemessen als 4 Gew.-%ige wässrige Lösung nach Höppler bei 20°C, DIN 53015).

Gemäß einer besonders bevorzugten Ausführungsform der vorliegenden Erfindung ist das thermoplastisch verarbeitbare Polymere (A) intern plastifiziert, d. h. es weist geeignete Comonomereinheiten (3) auf, die die Schmelztemperatur des Polymers (A) verglichen mit der Schmelztemperatur des Polymers (gemessen mittels DSC) ohne diese Einheiten herabsetzen. In diesem Zusammenhang besonders geeignete Comonomereinheiten weisen eine oder mehrere Ethylenglykol- (-O-CH₂-CH₂-O-) und/oder Propylenglykoleinheiten (-O-CH(CH₃)-CH₂-O-) auf.

Als Weichmacher können alle dem Fachmann bekannten und mit Polyvinylalkohol verträglichen Weichmacher sowie Mischungen derselben eingesetzt werden. Bevorzugte Weichmacher sind Alkohole, vorzugsweise mehrwertige Alkohole sowie deren Derivate, wie beispielsweise Glykole (z.B. Glykol, Diglykol, Triglykol und Polyethylenglykole), Glycerin, Diole und Triole. Erfindungsgemäß ganz besonders bevorzugte extern plastifizierte Polymere (A) werden in den Druckschriften EP 0,004,587 A und EP 0,155,606 A beschrieben, auf deren Offenbarung hiermit explizit bezug genommen wird. Sie werden vorzugsweise in einer Menge von 0,1 bis 20 Gewichtsteile pro 100 Gewichtsteile Polymer (A) eingesetzt.

Weiterhin kann bei dem erfindungsgemäßen Verfahren auch ein geringer Anteil an Wasser zugegeben werden. Vorteilhaft an dem erfindungsgemäßen Verfahren ist jedoch der niedrige Anteil an Wasser, der im Bereich von 0 bis <2,0 Gew.-%, bezogen auf das eingesetzte Polymer (A), liegt. Auf diese Weise erübrigt sich das aufwendige Entfernen größerer Mengen Wasser in der Entgasungszone des Extruders.

Im Rahmen der vorliegenden Erfindung umfassen die angegebenen Wassermengen sowohl die Wasseranteile der Ausgangskomponenten sowie gegebenenfalls separat zugesetztes Wasser. Gemäß einer besonders vorteilhaften Ausführungsform der vorliegenden Erfindung wird weniger als 1,5 Gew.-%, vorzugsweise weniger als 1,0 Gew.-%, zweckmäßigerweise weniger als 0,5 Gew.-%, insbesondere weniger als 0,1 Gew.-% Wasser, jeweils bezogen auf das Gesamtgewicht des Polymers (A), zugegeben.

Gemäß einer weiteren besonders bevorzugten Ausführungsform der vorliegenden Erfindung beträgt die zugesetzte Menge an Wasser mindestens 0,1 Gew.-%, vorzugsweise 0,5 Gew.-%, insbesondere 1,0 Gew.-%, jeweils bezogen auf das Gesamtgewicht an Polymer (A).

Methoden zur Bestimmung des Wassergehaltes sind dem Fachmann bestens bekannt. Im Rahmen der vorliegenden Erfindung hat sich die Wasserbestimmung nach Karl-Fischer mit Trocknungsofen besonders bewährt, welche in der Norm DIN 51777 näher spezifiziert wird.

Als weitere, vorzugsweise feste Additive können Gleitmittel, Antiblockmittel, Oxidationsstabilisatoren, Pigmente, Farbstoffe, feste Weichmacher, Füllstoffe und/oder andere polymere Verbindungen eingesetzt werden.

Erfindungsgemäß können alle dem Fachmann bekannten Verfahren zur thermoplastischen Verarbeitung eingesetzt werden. Entsprechend können auch alle dem Fachmann bekannten und für diesen Zweck geeigneten Vorrichtungen eingesetzt werden. Bevorzugt ist jedoch die Schmelzextrusion und somit die Verwendung von Schmelzextrudern. Besonders bevorzugt werden selbstreinigende Doppelschneckenextruder verwendet.

Die Auswahl geeigneter Extruderschnecken, deren Geometrien den entsprechenden verfahrenstechnischen Aufgaben, wie z.B. Einziehen, Fördern, Homogenisieren, Aufschmelzen und Komprimieren angepasst werden müssen, gehört dabei zum allgemeinen Wissen des Fachmannes.

Die Aufgabe der einzelnen Bestandteile (Polymer (A), Weichmacher, Wasser und weitere Additive) kann dabei in räumlich beliebiger Reihenfolge erfolgen. Die Aufgabe des festen Polymers (A), gegebenenfalls zusammen mit anderen Bestandteilen, erfolgt jedoch vorzugsweise in der Aufgabezone des Extruders. So kann das Polymer (A) beispielsweise zusammen mit dem Weichmacher sowie gegebenenfalls dem Wasser in der Aufgabezone des Extruders zugegeben werden. Vorzugsweise erfolgt aber die Zugabe des Weichmachers und gegebenenfalls die Zugabe des Wassers in einer der nach der Aufgabezone folgenden Zonen des Extruders. Besonders bevorzugt werden jedoch der Weichmacher und das Wasser, sofern eingesetzt, räumlich getrennt vom Polymer (A) zugegeben, um Verklebungen im Einzugsbereich zu vermeiden.

Weitere flüssige Additive können zusammen mit dem Weichmacher oder über eine oder mehrere weitere separate Flüssigkeitsdosierungen zugegeben werden. Feste Additive können entweder im Weichmacher gelöst oder suspendiert oder über eine weitere Feststoffdosiervorrichtung, die sich vorzugsweise entweder in der Aufgabezone oder einer der nach der Aufgabezone folgenden Zonen befindet, zugegeben werden. Besonders bevorzugt für die Zugabe fester Additive ist eine seitlich angebrachte Schneckendosierung.

Im Einzugsbereich des Schneckenextruders werden vorzugsweise Zylindertemperaturen im Bereich von 20 bis 60°C eingestellt. Dem Einzugsbereich folgen Zonen in denen das Material aufgeschmolzen und homogenisiert wird, gefolgt vom Austragsbereich (Düse oder Werkzeug). Die Homogenisierung der Schmelze erfolgt dabei vorzugsweise durch die Verwendung von Knetblöcken. Im Aufschmelz- und Homogenisierungsbereich werden vorzugsweise Temperaturprofile im Bereich von 130 bis 250°C, besonders bevorzugt 150 bis 230°C, eingestellt. Im Austragsbereich werden vorzugsweise Temperaturen im Bereich von 170 bis 230°C eingestellt. Bei der Durchführung des erfindungsgemäßen Verfahrens wird hinsichtlich der Einstellung der Heizzonen des Extruders besonders bevorzugt ein ansteigendes Temperaturprofil von der Aufgabezone bis zum Werkzeug verwendet. Das verwendete Temperaturprofil variiert dabei in Abhängigkeit vom eingesetzten Polymer (A). So kann z.B. bei niedrigviskosen, teilverseiften Polymeren (A) mit deutlich niedrigeren Temperaturen gearbeitet werden als bei hochviskosen, vollverseiften Polymeren (A). So liegen die maximalen Zylindertemperaturen im Homogenisierungsbereich des Extruders, bei teilverseiften Polyvinylalkoholen zwischen 190 und 210°C und bei vollverseiften Polyvinylalkoholen zwischen 200 und 250°C.

Darüber hinaus können der Schmelze nach Aufschmelzen und Homogenisieren leicht flüchtige Anteile durch Entgasung bei Normaldruck oder unter Anlegen von Vakuum entzogen werden. Die Entgasung findet dabei vorzugsweise unmittelbar vor dem Werkzeug des Extruders statt. Für den Fall, dass zur gleichmäßigen Förderung eine Schmelzepumpe verwendet wird, befindet sich die Entgasung unmittelbar vor der Schmelzepumpe.

Bei der erfindungsgemäßen Schmelzextrusion ist keine Kühlung der Schmelze notwendig. Vielmehr wurde überraschenderweise gefunden, dass sogar zusätzliche Heizenergie über die Heizzonen des Extruders eingebracht werden kann, ohne dass es zu einer signifikanten thermischen Schädigung der Vinylalkohol(co)polymer-Zusammensetzung sowie der daraus hergestellten Formkörper kommt. Ebenfalls überraschend ist, dass wenn der Schmelze zusätzlich Heizenergie im Zylinder und im Werkzeug des Extruders zugeführt wird, besonders homogene Formkörper resultieren. Darüber hinaus kommt es durch das zusätzliche Einbringen von Heizenergie und den dadurch zugänglichen, hohen Massetemperaturen zu einer Viskositätserniedrigung der Schmelze, wodurch bei dem erfindungsgemäßen Verfahren verglichen mit den aus dem Stand der Technik bekannten Verfahren höhere Durchsätze möglich sind.

Durch den Einsatz entsprechender Werkzeuge, wie z.B. Flachdüsen, Ringdüsen oder Profilwerkzeugen, ist es möglich, mit dem erfindungsgemäßen Verfahren direkt Formkörper herzustellen. Auf diese Weise lassen sich Formkörper, wie z.B. Flachfolien, Blasfolien, Pellets, Fasern oder Monofilamente herstellen. Die Formkörper werden nach dem Verlassen des Extruderwerkzeuges nach dem Fachmann bekannten Verfahren abgekühlt. Bevorzugt ist die Herstellung von Pellets. Diese werden nach dem Verlassen des Extruderwerkzeuges und der Abkühlung nach dem Fachmann bekannten Verfahren granuliert. Die hergestellten Pellets können in nachgeschalteten Aggregaten zu Spritzgussartikeln, Blas- und Flachfolien unterschiedlicher Dicke sowie Fasern und Monofilamenten weiterverarbeitet werden.

Die durch das erfindungsgemäße Verfahren hergestellten Formkörper weisen eine exzellente Klarheit und Transparenz, eine hohe Homogenität, einen geringen Stippenanteil, eine weitgehende Farblosigkeit und eine, über die Formulierung einstellbare, definierte Löslichkeit, auf.

Die Formkörper zeichnen sich je nach verwendeter Vinylalkohol(co)polymer-Zusammensetzung durch unterschiedliche Wasserlöslichkeiten aus und sind weitgehend frei von nicht aufgeschmolzenen Bestandteilen (Stippen). Je nach verwendeter Vinylalkohol(co)polymerZusammensetzung und gegebenenfalls verwendeten Additiven lassen sich unterschiedliche Löslichkeiten gegenüber sauren, alkalischen oder detergenzienhaltigen Medien einstellen.

Darüber hinaus wurde überraschenderweise gefunden, dass die durch das erfindungsgemäße Verfahren hergestellten Formkörper eine gemäß DSC-Messung höhere maximale Schmelztemperatur aufweisen, als eine gleiche Blend-Zusammensetzung, die mittels eines Zwangsmischers hergestellt wurde.

Die Formkörper können beispielsweise zur Verpackung von festen und flüssigen Produkten verwendet werden. Eine besondere Eigenschaft der Formkörper besteht dabei in der gezielt einstellbaren Wasserlöslichkeit unter verschiedensten Einsatzbedingungen.

Die Erfindung wird im folgenden anhand von Ausführungsbeispielen näher beschrieben, ohne dadurch jedoch beschränkt zu werden.

### DSC-Messungen

Die DSC-Messungen werden mit einem Gerät der Fa. Mettler, Typ DSC820 mit Roboter durchgeführt. Die Messungen werden von -10°C bis 250°C mit einer Heizrate von 20°C/Min durchgeführt. Man heizt und kühlt mit jeweils 20°C/Min und erhält insgesamt 3 Messkurven (l. Heizen, 1. Kühlen und 2.Heizen). Die Einwaage der Proben beträgt jeweils ca. 10 mg.

### Beispiele 1 bis 16 (Vergleich)

### Herstellung der Polyvinylalkohol-Granulate

Auf einem Leistritz Doppelschneckenextruder Typ ZSE 27 GL 1200 mit 27 mm Schneckendurchmesser, einem L/D von 40 und 9 Heizzonen werden die in der Tabelle 1 angegebenen Formulierungen extrudiert. Die Temperatur-Einstellungen der einzelnen Heizzonen wird in Tabelle 2 wiedergegeben. Bei 37 D wird eine Vakuumentgasung verwendet. Mittels einer Lochdüse werden Stränge hergestellt. Die erhaltenen Stränge sind homogen und blasenfrei. Die Abkühlung erfolgt sowohl mittels Gitternetzband mit Luftkühlung als auch durch Kühlung im Wasserbad mit anschließender Granulierung.

Das in Beispiel 2 hergestellte Granulat wird mittels DSC Messung im Vergleich zu einem mit einem Zwangsmischer hergestellten Blend (Blendherstellung gemäß Kunstharz-Nachrichten, Ausgabe 14, Seiten 1-6, 1978 analysiert. Die maximale Schmelztemperatur bei dem im Mischer hergestellten Blend beträgt 168°C, das nach Beispiel 2 mittels Direktcompoundierung hergestellte Granulat besitzt eine maximale Schmelztemperatur von 169°C. Ausgewertet wird dabei jeweils das zweite Heizen.

### Beispiel 17 (Vergleich)

Das in Beispiel 1 hergestellte Granulat wird auf einer Spritzgussmaschine Typ RICO, mit 1000 kN Schließkraft, 36 mm Schneckendurchmesser, offene Düse, max. Schussvolumen 152 ml, mit einem Spiralwerkzeug zu einer homogenen Spirale mit den Maßen 2 mm Dicke, 8 mm Breite und einer Länge von 44 cm verarbeitet.

### Einstellung der Heizzonen:

Zone 1: 160°C
Zonen 2 bis 4: 170°C

Die Spirale ist bei visueller Beurteilung frei von nicht aufgeschmolzenen Anteilen.

Im Vergleich dazu wird ein mit einem Zwangsmischer hergestellter Blend gleicher Formulierung wie in Beispiel 1 (Blendherstellung gemäß Kunstharz-Nachrichten, Ausgabe 14, Seiten 1 bis 6, 1978) unter analogen Bedingungen verarbeitet, wobei eine Spirale von 40 cm Länge und geringen Anteilen an nicht homogen aufgeschmolzenem Material erhalten wird.

### Beispiele 18 bis 25 (Vergleich)

Die in den Beispielen 2, 3, 7, 10, 11, 12, 14 und 16 hergestellten Granulate werden analog Beispiel 17 im Vergleich zu mit einem Zwangsmischer hergestellten Blends gleicher Formulierung (Blendherstellung gemäß Kunstharz-Nachrichten, Ausgabe 14, Seiten 1 bis 6, 1978) auf einer Spritzgussmaschine ebenfalls zu Spiralen unterschiedlicher Länge verarbeitet.

Das Temperaturprofil der Heizzonen wird bei Formulierungen mit vollverseiften Polyvinylalkoholen sowie bei Formulierungen mit höherviskosen, teilverseiften Formulierungen um 10 bis 40°C angehoben.

Die Spiralen sind bei Verwendung der erfindungsgemäßen Granulate in jedem Fall länger und enthalten geringere Anteile an nicht homogen aufgeschmolzenen Anteilen als bei Verwendung von Blends gemäß dem Stand der Technik.

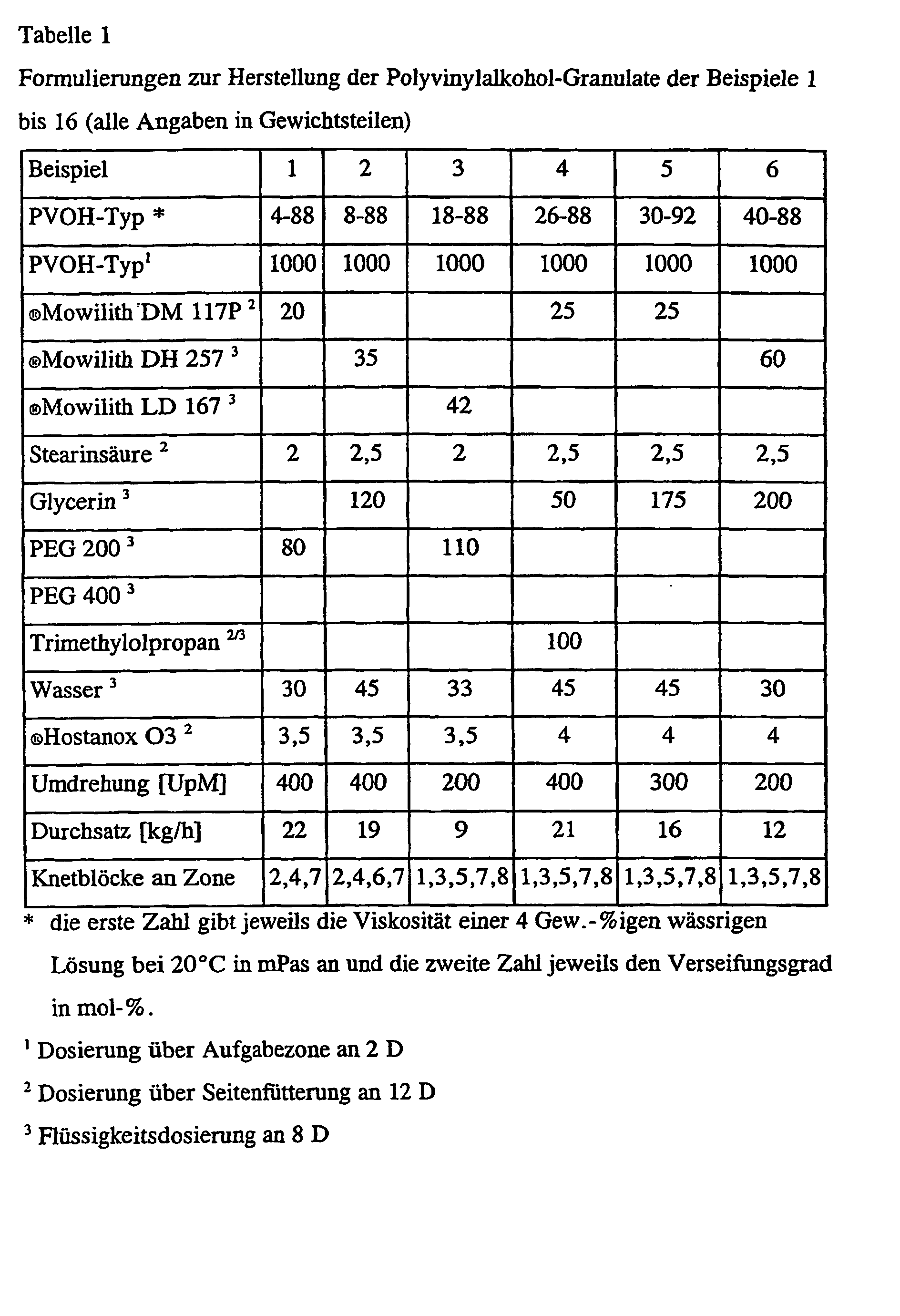

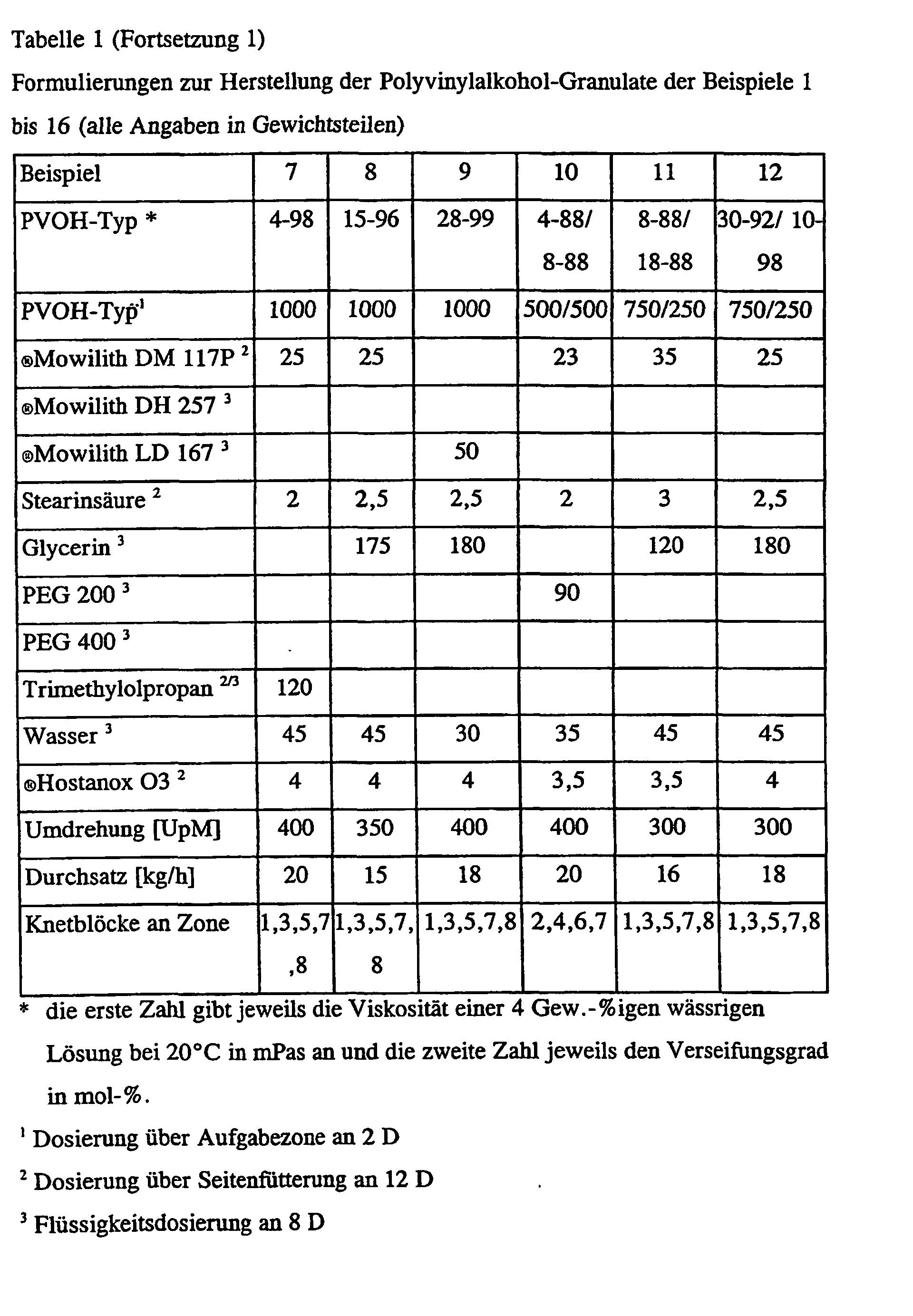

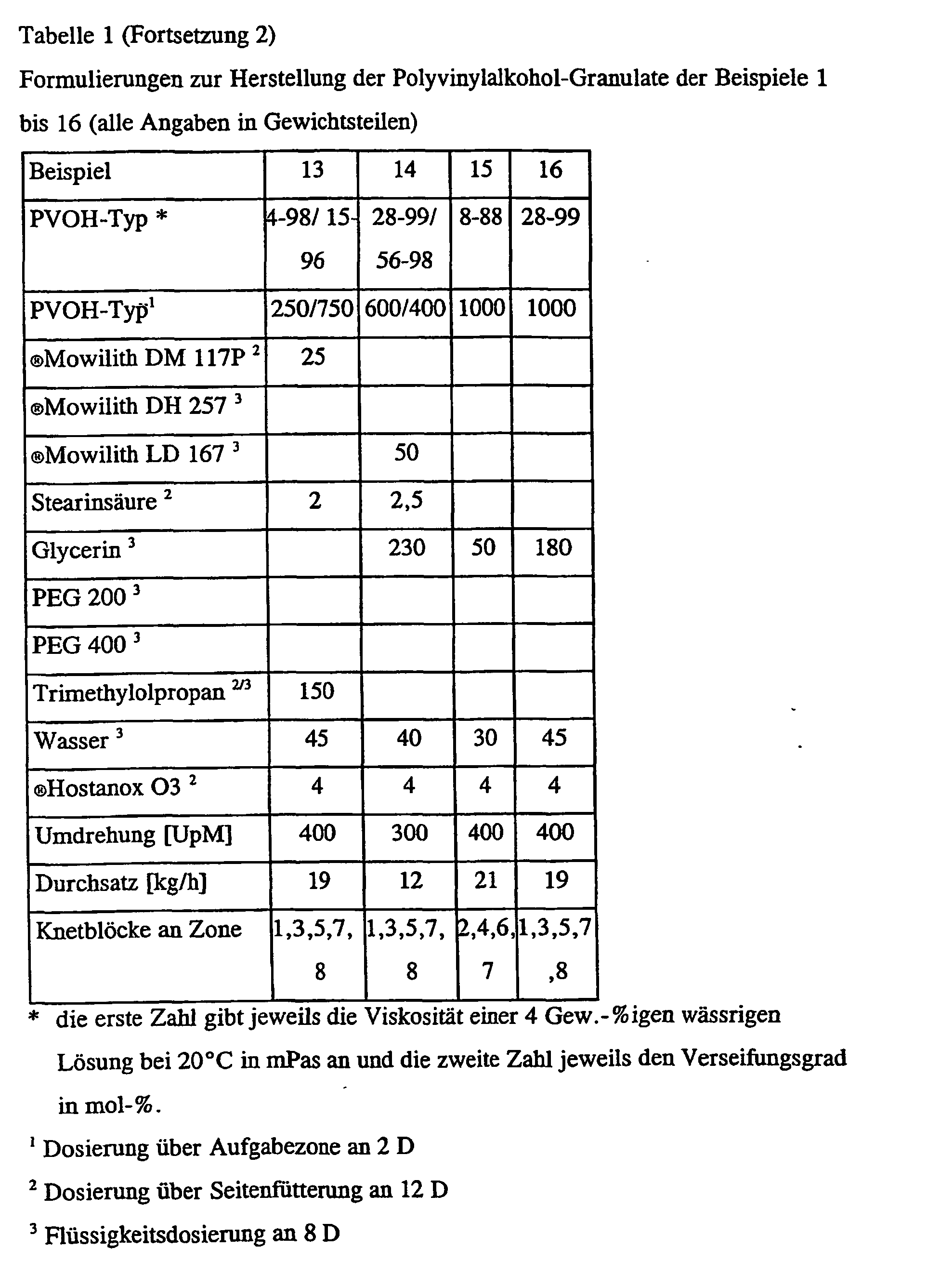

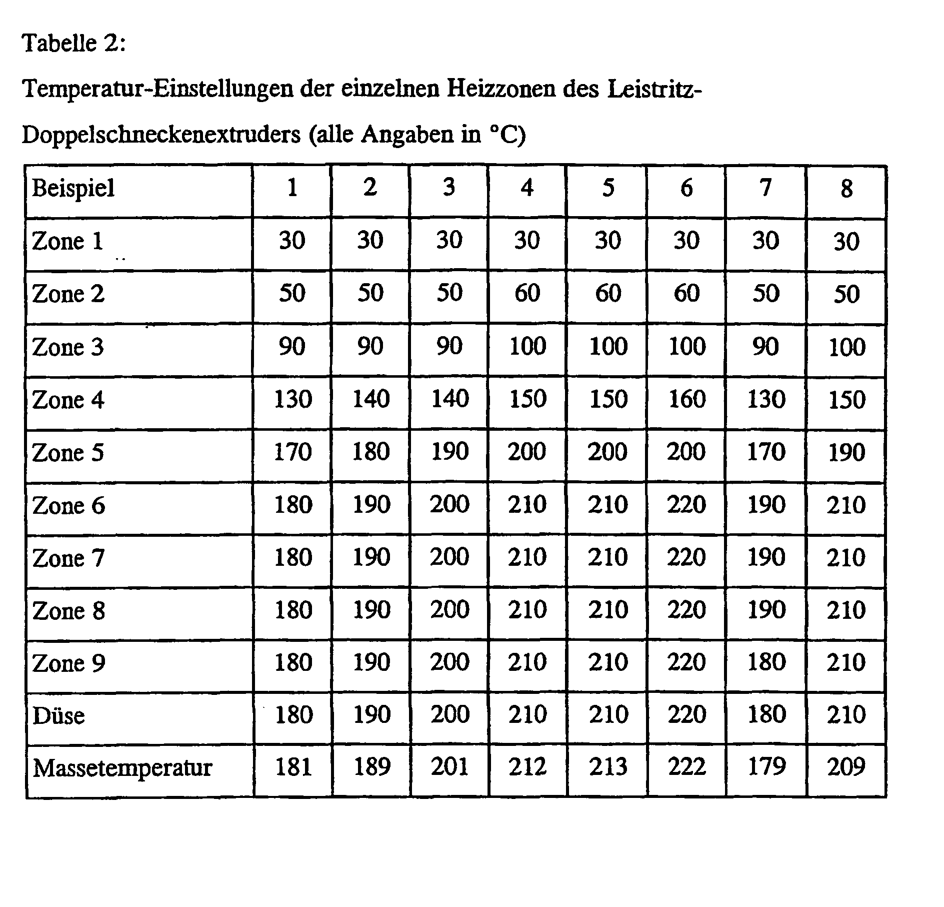

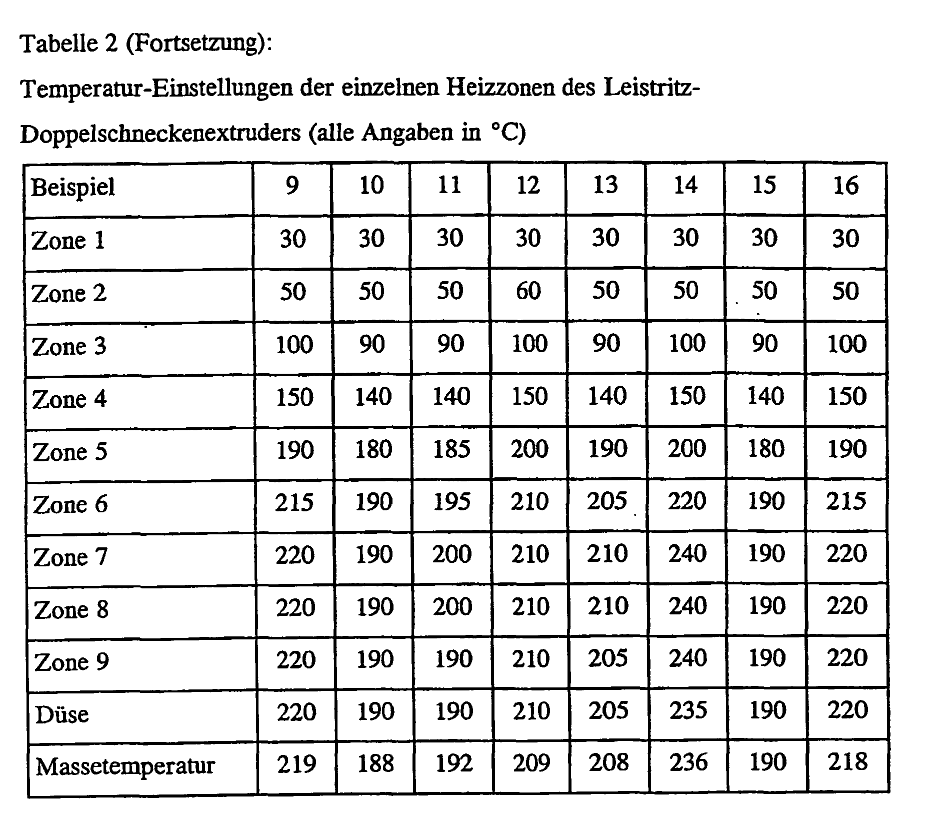

### Beispiel 26 (Vergleich)

Das in Beispiel 2 hergestellte Granulat wird im Vergleich zu einem mit einem Zwangsmischer hergestellten Blend gleicher Formulierung (Blendherstellung gemäß Kunstharz-Nachrichten, Ausgabe 14, Seiten 1 bis 6, 1978) auf einem Blasfolienextruder Typ Göttfert, 30 mm Einschnecke, L/D = 25, 30 mm Spaltdurchmesser, 0,6 mm Spaltbreite mit einer kernprogressiven Schnecke bei einer Drehzahl von 50 UpM und einem Durchsatz von 3,5 kg/h zu ca. 20 µm dünnen Blasfolien extrudiert.
Kompressionsverhältnis Schnecke: 1:4

### Einstellung der Heizzonen:

Zonen 1 und 2: 205°C
Zone 3: 200°C
Zonen 4 bis 6: 195°C
Düse: 170°C

Die erhaltenen Folien werden hinsichtlich Stippen mit einem Folienqualitätsmessgerät (FQA) der Fa. Brabender, bestehend aus einer CCD-Zeilenkamera mit Beleuchtungseinheit und separatem EDV-gestütztem Auswertesystem, analysiert. Die aus dem Granulat gemäß Beispiel 2 hergestellte Folie besitzt eine um den Faktor 10 geringere Stippenhäufigkeit (Stippen > 400 µm) als die aus dem Blend gemäß dem Stand der Technik hergestellte Folie.

### Beispiele 27 bis 33 (Vergleich)

Die in den Beispielen 4, 5, 6, 8, 9, 13 und 15 hergestellten Granulate werden analog Beispiel 26 im Vergleich zu einem mit einem Zwangsmischer hergestellten Blend gleicher Formulierung (Blendherstellung gemäß Kunstharz-Nachrichten, Ausgabe 14, Seiten 1 bis 6, 1978) auf einem Blasfolienextruder Typ Göttfert zu Blasfolien extrudiert und auf Stippen analysiert.

Bei Formulierungen mit vollverseiften Polyvinylalkoholen wird dabei eine Schnecke mit einem Kompressionsverhältnis von 1:2,5 verwendet. Das Temperaturprofil der Heizzonen wird bei Formulierungen mit vollverseiften Polyvinylalkoholen sowie bei Formulierungen mit höherviskosen, teilverseiften Formulierungen um 10 bis 20°C angehoben.

In jedem Fall resultiert bei Folien aus den Granulaten gemäß den Beispielen 4, 5, 6, 8, 9, 13 und 15 ein niedrigerer Stippengehalt, als bei Folien die gemäß dem Stand der Technik hergestellt werden.

### Beispiele 34 bis 40 (Vergleich)

### Herstellung der Polyvinylalkohol-Granulate

Auf einem Leistritz Doppelschneckenextruder Typ ZSE 27 GL 1200 mit 27 mm Schneckendurchmesser, einem L/D von 40 und 9 Heizzonen werden die in der Tabelle 3 angegebenen Formulierungen extrudiert. Die Temperatur-Einstellungen der einzelnen Heizzonen wird in Tabelle 4 wiedergegeben. Bei 37 D wird eine Vakuumentgasung verwendet. Mittels einer Lochdüse werden Stränge hergestellt. Die erhaltenen Stränge sind homogen und blasenfrei. Die Abkühlung erfolgt sowohl mittels Gitternetzband mit Luftkühlung als auch durch Kühlung im Wasserbad mit anschließender Granulierung.

Die Auswertung Stippenhäufigkeit ist Tabelle 5 zu entnehmen.

**Tabelle 3**

| Formulierungen zur Herstellung der Polyvinylalkohol-Granulate der Beispiele 34 bis 40 (alle Angaben in Gewichtsteilen) auf Leistritz Doppelschneckenextruder aus Beispiel 1 | | | | | | | |
|---|---|---|---|---|---|---|---|
| Beispiel | 34 | 35 | 36 | 37 | 38 | 39 | 40 |
| PVOH-Typ * | 8-88 | 18-88 | 26-88 | 30-92 | 15-96 | 28-99 | 28-99/ 56-98 |
| PVOH-Typ¹ | 1000 | 1000 | 1000 | 1000 | 1000 | 1000 | 600/400 |
| ®Mowilith DM 117P ² | 35 | 25 | 25 | 35 | 25 | 25 | 25 |
| Stearinsäure ² | 2,5 | 2 | 2,5 | 2,5 | 2,5 | 2,5 | 2,5 |
| Glycerin ³ | 120 | | 50 | 175 | 180 | 180 | 230 |
| PEG 200 ³ | | 120 | | | | | |
| Trimethylolpropan ^{2/3} | | | 100 | | | | |
| Wasser ³ | 45 | 33 | 40 | 40 | 45 | 30 | 40 |
| Umdrehung [UpM] | 400 | 200 | 400 | 300 | 350 | 400 | 300 |
| Durchsatz [kg/h] | 18 | 11 | 19 | 16 | 15 | 19 | 13 |
| Knetblöcke an Zone | 2,4, 6,7 | 1,3,5,7,8 | 1,3,5,7,8 | 1,3,5,7,8 | 1,3,5,7,8 | 1,3,5,7,8 | 1,3,5,7,8 |

| | | | | | | | |
|---|---|---|---|---|---|---|---|
| * die erste Zahl gibt jeweils die Viskosität einer 4 Gew.-%igen wässrigen Lösung bei 20°C in mPas an und die zweite Zahl jeweils den Verseifungsgrad in mol-%. | | | | | | | |
| ¹ Dosierung über Aufgabezone an 2 D | | | | | | | |
| ² Dosierung über Seitenfütterung an 12 D | | | | | | | |
| ³ Flüssigkeitsdosierung an 8 D | | | | | | | |

**Tabelle 4:**

| Temperatur-Einstellungen der einzelnen Heizzonen des Leistritz-Doppelschneckenextruders (alle Angaben in °C) | | | | | | | |
|---|---|---|---|---|---|---|---|
| Beispiel | 34 | 35 | 36 | 37 | 38 | 39 | 40 |
| Zone 1 | 30 | 30 | 30 | 30 | 30 | 30 | 30 |
| Zone 2 | 50 | 50 | 60 | 60 | 50 | 50 | 50 |
| Zone 3 | 90 | 90 | 100 | 100 | 100 | 100 | 100 |
| Zone 4 | 140 | 140 | 150 | 150 | 150 | 150 | 150 |
| Zone 5 | 180 | 190 | 200 | 200 | 190 | 190 | 200 |
| Zone 6 | 190 | 200 | 210 | 210 | 210 | 215 | 220 |
| Zone 7 | 190 | 200 | 210 | 210 | 210 | 220 | 240 |
| Zone 8 | 190 | 200 | 210 | 210 | 210 | 220 | 240 |
| Zone 9 | 190 | 200 | 210 | 210 | 210 | 220 | 240 |
| Düse | 190 | 200 | 210 | 210 | 210 | 220 | 235 |
| Massetemperatur | 190 | 200 | 209 | 209 | 210 | 221 | 236 |

**Tabelle 5:**

| Ergebnis des Film Quality Analysers der Fa. Brabender Anzahl der Stippen in unterschiedlichen Größenklassen | | | | | | | |
|---|---|---|---|---|---|---|---|
| Beispiel | 34 | 35 | 36 | 37 | 38 | 39 | 40 |
| 40 - 100 µm | 88 | 75 | 78 | 95 | 90 | 110 | 120 |
| 100 - 300 µm | 30 | 35 | 29 | 15 | 24 | 45 | 60 |
| 300 - 800 µm | 8 | 10 | 11 | 6 | 12 | 20 | 38 |
| > 800 µm | 1 | 0 | 2 | 0 | 1 | 5 | 8 |

### Beispiele 41 bis 47 (erfindungsgemäße Beispiele)

### Herstellung der Polyvinylalkohol-Granulate

Auf einem Leistritz Doppelschneckenextruder Typ ZSE 27 GL 1200 mit 27 mm Schneckendurchmesser, einem L/D von 40 und 9 Heizzonen werden die in der Tabelle 6 angegebenen Formulierungen extrudiert. Die Temperatur-Einstellungen der einzelnen Heizzonen wird in Tabelle 7 wiedergegeben. Bei 37 D wird eine Vakuumentgasung verwendet. Mittels einer Lochdüse werden Stränge hergestellt. Die erhaltenen Stränge sind homogen und blasenfrei. Die Abkühlung erfolgt sowohl mittels Gitternetzband mit Luftkühlung als auch durch Kühlung im Wasserbad mit anschließender Granulierung.

Die Auswertung Stippenhäufigkeit ist Tabelle 8 zu entnehmen.

**Tabelle 6**

| Formulierungen zur Herstellung der Polyvinylalkohol-Granulate der Beispiele 41 bis 47 (alle Angaben in Gewichtsteilen) auf Leistritz Doppelschneckenextruder aus Beispiel 1. | | | | | | | |
|---|---|---|---|---|---|---|---|
| Beispiel | 41 | 42 | 43 | 44 | 45 | 46 | 47 |
| PVOH-Typ * | 8-88 | 18-88 | 26-88 | 30-92 | 15-96 | 28-99 | 28-99/56-98 |
| PVOH-Typ¹ | 1000 | 1000 | 1000 | 1000 | 1000 | 1000 | 600/400 |
| ®Mowilith DM 117P ² | 35 | 25 | 25 | 35 | 25 | 25 | 25 |
| Stearinsäure ² | 2,5 | 2 | 2,5 | 2,5 | 2,5 | 2,5 | 2,5 |
| Glycerin ³ | 120 | | 50 | 175 | 180 | 180 | 230 |
| PEG 200 ³ | | 120 | | | | | |
| Trimethylolpropan ² | | | 100 | | | | |
| Umdrehung [UpM] | 400 | 200 | 400 | 300 | 350 | 400 | 300 |
| Durchsatz [kg/h] | 17 | 11 | 20 | 15 | 14 | 19 | 14 |
| Knetblöcke an Zone | 2,4, 6,7 | 1,3,5, 7,8 | 1,3,5, 7,8 | 1,3,5, 7,8 | 1,3,5, 7,8 | 1,3,5, 7,8 | 1,3,5,7,8 |

| | | | | | | | |
|---|---|---|---|---|---|---|---|
| * die erste Zahl gibt jeweils die Viskosität einer 4 Gew.-%igen wässrigen Lösung bei 20°C in mPas an und die zweite Zahl jeweils den Verseifungsgrad in mol-%. | | | | | | | |
| ¹ Dosierung über Aufgabezone an 2 D | | | | | | | |
| ² Dosierung über Seitenfütterung an 12 D | | | | | | | |
| ³ Flüssigkeitsdosierung an 8 D | | | | | | | |

**Tabelle 7:**

| Temperatur-Einstellungen der einzelnen Heizzonen des Leistritz-Doppelschneckenextruders (alle Angaben in °C) | | | | | | | |
|---|---|---|---|---|---|---|---|
| Beispiel | 41 | 42 | 43 | 44 | 45 | 46 | 47 |
| Zone 1 | 40 | 40 | 40 | 40 | 40 | 40 | 40 |
| Zone 2 | 70 | 70 | 70 | 70 | 70 | 70 | 70 |
| Zone 3 | 100 | 100 | 110 | 110 | 110 | 110 | 120 |
| Zone 4 | 150 | 150 | 160 | 160 | 160 | 160 | 180 |
| Zone 5 | 190 | 190 | 205 | 205 | 195 | 200 | 215 |
| Zone 6 | 200 | 210 | 215 | 215 | 210 | 215 | 225 |
| Zone 7 | 200 | 210 | 215 | 215 | 210 | 220 | 240 |
| Zone 8 | 200 | 200 | 215 | 215 | 215 | 225 | 240 |
| Zone 9 | 190 | 200 | 210 | 210 | 215 | 225 | 240 |
| Düse | 190 | 200 | 210 | 210 | 210 | 220 | 235 |
| Massetemperatur | 192 | 203 | 211 | 212 | 213 | 223 | 238 |

**Tabelle 8:**

| Ergebnis des Film Quality Analysers der Fa. Brabender Anzahl der Stippen in unterschiedlichen Größenklassen | | | | | | | |
|---|---|---|---|---|---|---|---|
| Beispiel | 41 | 42 | 43 | 44 | 45 | 46 | 47 |
| 40 - 100 µm | 60 | 55 | 50 | 70 | 60 | 90 | 94 |
| 100 - 300 µm | 18 | 19 | 16 | 5 | 13 | 27 | 29 |
| 300 - 800 µm | 3 | 5 | 7 | 2 | 7 | 10 | 17 |
| > 800 µm | 0 | 0 | 0 | 0 | 0 | 1 | 2 |

## Patentansprüche

1. Verfahren zur Herstellung von Kunststoff-Formkörpern durch thermoplastische Verarbeitung von mindestens einem -Polymer (A), mindestens einem Weichmacher sowie gegebenenfalls Wasser und/oder weiteren Additiven, wobei das Polymer (A)
a.) 15,0 bis 99,9 Gew.-% Struktureinheiten der Formel (1) 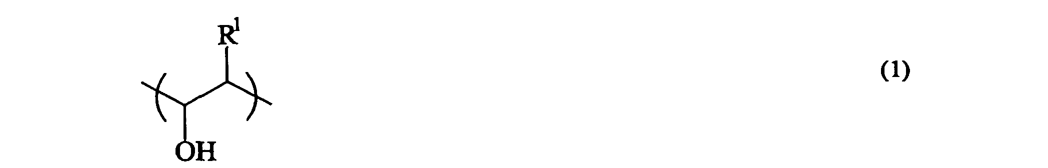 wobei R¹ Wasserstoff oder Methyl bedeutet,
b.) 0,0 bis 50,0 Gew.-% Struktureinheiten der Formel (2) 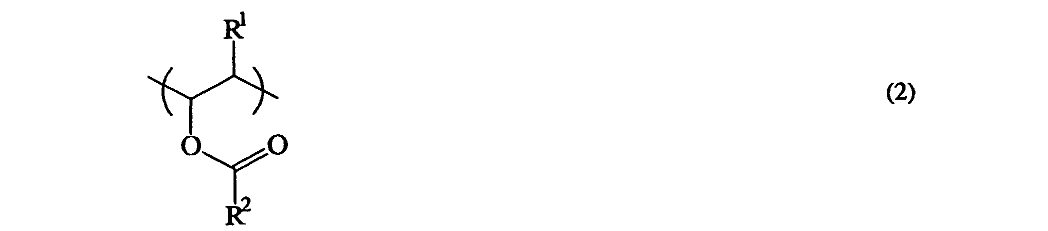 wobei R² einen Alkylrest mit 1 bis 6 Kohlenstoffatomen darstellt,
c.) 0,0 bis 50,0 Gew.-% Struktureinheiten der Formel (3) 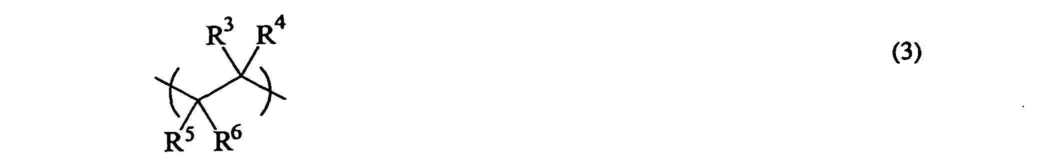 wobei R³, R⁴, R⁵ und R⁶, jeweils unabhängig voneinander Reste mit einem Molekulargewicht im Bereich von 1 bis 500 g/mol sind,
jeweils bezogen auf das Gesamtgewicht des Polymers (A) aufweist,
**dadurch gekennzeichnet, dass** das Polymer (A) und der Weichmacher ohne vorherige Mischung in den Extruder gegeben werden und dass der Anteil an Wasser weniger als 2 Gew.-%, bezogen auf den Polyvinylalkohol, beträgt.

2. Verfahren gemäß Anspruch 1, **dadurch gekennzeichnet, dass** Polyvinylalkohole mit einem Hydrolysegrad im Bereich von 70 bis 100 Mol-% und einer Viskosität der 4 Gew.-%igen wäßrigen Lösung im Bereich von 2 bis 70 mPas eingesetzt werden.

3. Verfahren gemäß Anspruch 1 oder 2, **dadurch gekennzeichnet, dass** als Weichmacher mehrwertige Alkohole sowie deren Derivate, Polyethylenglykole, Glycerin, Diole und Triole sowie Mischungen derselben eingesetzt werden.

4. Verfahren gemäß mindestens einem der Ansprüche 1 bis 3, **dadurch gekennzeichnet, dass** als weitere Additive Gleitmittel, Antiblockmittel, Oxidationsstabilisatoren, Pigmente, Farbstoffe, feste Weichmacher, Füllstoffe und/oder andere polymere Verbindungen eingesetzt werden.

5. Verfahren gemäß mindestens einem der vorhergehenden Ansprüche, **dadurch gekennzeichnet, dass** die thermoplastische Verarbeitung mittels Schmelzextrusion erfolgt.

6. Verfahren gemäß mindestens einem der vorhergehenden Ansprüche, **dadurch gekennzeichnet, dass** das Polymer (A) intern plastifiziert ist.

## Claims

1. A process for producing plastics moldings via thermoplastic processing of at least one polymer (A), of at least one plasticizer, and also, where appropriate, of water and/or of other additives, where the polymer (A) comprises
a.)from 15.0 to 99.9% by weight of structural units of the formula (1) 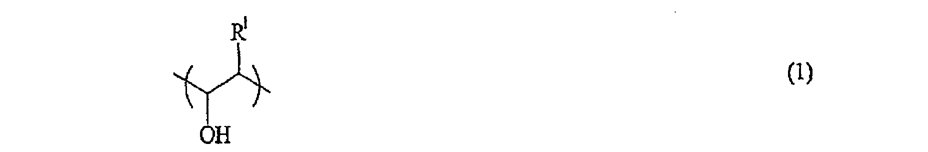 where R¹ is hydrogen or methyl,
b.)from 0.0 to 50.0% by weight of structural units of the formula (2) 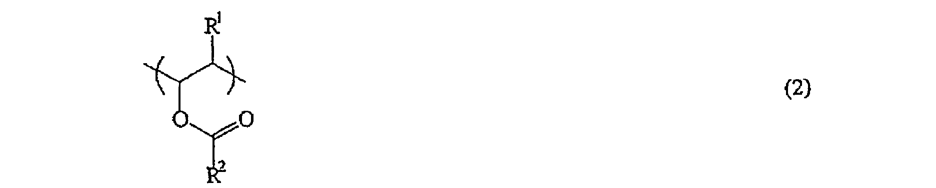 where R² is an alkyl radical having from 1 to 6 carbon atoms,
c.)from 0.0 to 50.0% by weight of structural units of the formula (3) 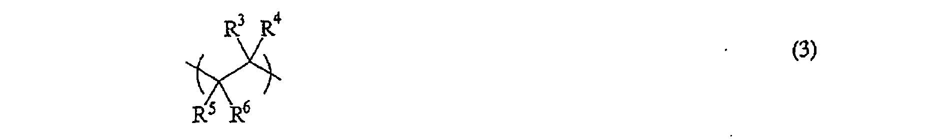 where each of R³, R⁴, R⁵, and R⁶, independently of the others, is a radical having a molar mass in the range from 1 to 500 g/mol,
based in each case on the total weight of the polymer (A),
**characterized in that** the polymer (A) and the plasticizer are introduced with no prior mixing into the extruder, and that the proportion of water is less than 2% by weight, based on the polyvinyl alcohol.

2. The process as claimed in claim 1, **characterized in that** use is made of polyvinyl alcohols with a degree of hydrolysis in the range from 70 to 100 mol% and with a viscosity, measured on a 4% by weight aqueous solution, in the range from 2 to 70 mPas.

3. The process as claimed in claim 1 or 2, **characterized in that** the plasticizers used comprise polyhydric alcohols, or else their derivatives, polyethylene glycols, glycerol, diols, and triols, or else mixtures of the same.

4. The process as claimed in at least one of claims 1 to 3, **characterized in that** other additives used comprise lubricants, antiblocking agents, antioxidants, pigments, dyes, solid plasticizers, fillers, and/or other polymeric compounds.

5. The process as claimed in at least one of the preceding claims, **characterized in that** the thermoplastic processing takes place by means of melt extrusion.

6. The process as claimed in at least one of the preceding claims, **characterized in that** the polymer (A) has been internally plasticized.

## Revendications

1. Procédé de fabrication de corps faconnés en matière plastique par traitement thermoplastique d'au moins un polymère (A), d'au moins un plastifiant, et le cas échéant, d'eau et/ou d'autres adjuvants, lequel polymère (A) comporte :
a) 15,0 à 99,9 % en poids de motifs structuraux de formule (1) : 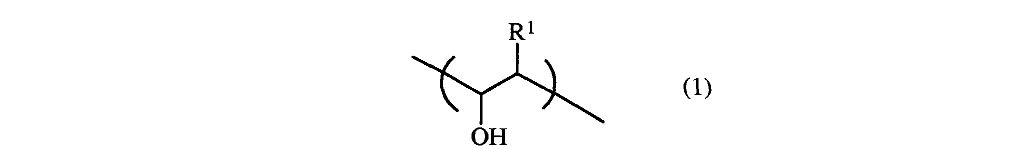 dans laquelle R¹ représente un atome d'hydrogène ou un groupe méthyle,
b) de 0,0 à 50,0 % en poids de motifs structuraux de formule (2) : 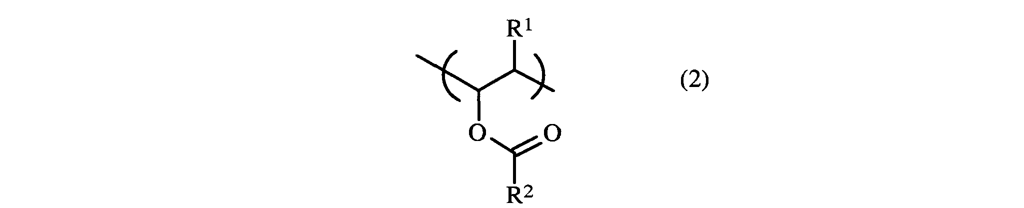 dans laquelle R² représente un groupe alkyle comportant 1 à 6 atomes de carbone,
c) et de 0,0 à 50,0 % en poids de motifs structuraux de formule (3) : 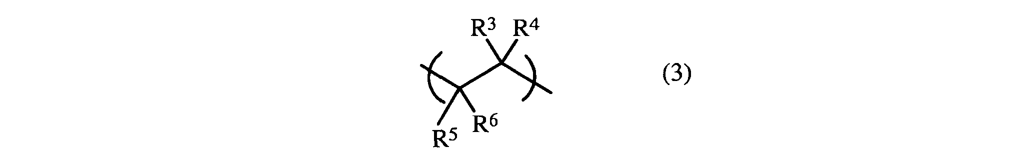 dans laquelle R³, R⁴, R⁵ et R⁶ représentent chacun, indépendamment les
uns des autres, des restes dont la masse molaire vaut de 1 à 500 g/mol, ces pourcentages étant rapportés chacun au poids total du polymère (A), lequel procédé est **caractérisé en ce que** l'on introduit le polymère (A) et le plastifiant dans l'extrudeuse sans les mélanger au préalable, et **en ce que** la quantité d'eau représente moins de 2 % du poids de poly(alcool vinylique).

2. Procédé conforme à la revendication 1, **caractérisé en ce que** l'on emploie des poly(alcool vinylique) dont le degré d'hydrolyse vaut de 70 à 100 % en moles et dont la viscosité, en solution aqueuse à 4 % en poids, vaut de 2 à 70 mPa.s.

3. Procédé conforme à la revendication 1 ou 2, **caractérisé en ce que** l'on emploie comme plastifiant des polyols et leurs dérivés, des polyéthylène-glycols, du glycérol, des diols ou des triols, ou des mélanges de tels composés.

4. Procédé conforme à l'une au moins des revendications 1 à 3, **caractérisé en ce que** l'on emploie comme autres adjuvants des lubrifiants, des agents antiadhérents, des agents de stabilisation vis-à-vis de l'oxydation, des pigments, des colorants, des plastifiants solides, des charges et/ou d'autres composés polymères.

5. Procédé conforme à l'une au moins des revendications précédentes, **caractérisé en ce que** le traitement thermoplastique est réalisé par extrusion de masse en fusion.

6. Procédé conforme à l'une au moins des revendications précédentes, **caractérisé en ce que** le polymère (A) est un polymère à plastification interne.
